# EUROPEAN PATENT SPECIFICATION

(11) **EP 1 457 917 B1**
(45) Date of publication and mention of the grant of the patent: **09.09.2009**
(21) Application number: 04075213.1
(22) Date of filing: 23.01.2004
(51) Int. Cl.: G06K 9/00

(54) **Apparatus and methods for converting network drawings from raster format to vector format**
Vorrichtung und Verfahren zur Umwandlung von Zeichnungen von Netzwerken von Rasterformat in Vektorformat
Dispositif et méthode pour convertir des schémas de connexion de format trame en format vecteur

(30) Priority: 04.02.2003 US 357847
(43) Date of publication of application: 15.09.2004
(73) Proprietor: The Boeing Company, Chicago, IL 60606-2016 (US)
(72) Inventor: Boose, Molly L., Bellevue, Washington 98008 (US); Shema, David B., Seattle Washington 98103 (US)
(74) Representative: McLeish, Nicholas Alistair Maxwell

(56) References cited:
- US-A1- 2001 055 426
- US-A1- 2002 191 848
- LONG JIN ET AL: "Practical technique in conversion of engineering drawings to CAD form" INSTRUMENTATION AND MEASUREMENT TECHNOLOGY CONFERENCE, 1998. IMTC/98. CONFERENCE PROCEEDINGS. IEEE ST. PAUL, MN, USA 18-21 MAY 1998, NEW YORK, NY, USA,IEEE, US, vol. 1, 18 May 1998 (1998-05-18), pages 8-13, XP010281691 ISBN: 0-7803-4797-8
- ZESHENG SHI ET AL: "A new input method for CAD-automatic read-in technique of paper drawings" PROCEEDINGS OF CHINA 1991 INTERNATIONAL CONFERENCE ON CIRCUITS AND SYSTEMS. PART 1, 16 June 1991 (1991-06-16), pages 431-433, XP010094101 SHENZHEN, CHINA
- LIU WENYIN ET AL: "From raster to vectors: extracting visual information from line drawings" PATTERN ANALYSIS AND APPLICATIONS SPRINGER-VERLAG UK, vol. 2, no. 1, 1999, pages 10-21, XP002326841 ISSN: 1433-7541
- TOMBRE, K. AND DORI, D.: "Interpretation of engineering drawings" IN: HANDBOOK OF CHARACTER RECOGNITION AND DOCUMENT IMAGE ANALYSIS, EDITORS: IN H. BUNKE AND P. S. P. WANG, 1996, pages 456-484, XP002326842 WORLD SCIENTIFIC PUBLISHING COMPANY

## Description

### FIELD OF THE INVENTION

The present invention relates to vectorization of raster images, and more particularly to apparatus and methods for converting network drawings from raster format to vector format.

### BACKGROUND OF THE INVENTION

Users of electronic technical drawings and schematics are increasingly demanding linking functionality comparable with that of electronic textual documents, wherein links between related pieces of information are common. As a result of the increasing demand, it is becoming more common for technical drawings to contain links that allow users to automatically link from an technical drawing to related graphical or textual information. Demand is also increasing for automatic understanding of technical content and its purpose in technical drawings. However, the difficulty in recognizing the many various graphical or logical constructs that may be contained in a technical drawing has prevented technical drawings from being provided with the same level of functionality as that associated with electronic text documents.

One approach to improving the functionality of technical and engineering drawings is through the use of vector drawings. With vector images, artwork is specified in a geometric sense, such as lines, circles, polygons, etc. and text is represented as text elements. Vector drawings also allow for embedded scripting, linking capability, among other explicit graphical and text entities. However, many existing technical drawings are not in vector format but instead comprise raster or bitmapped drawings, which are commonly produced by scanning paper copies of the technical drawings.

A raster image is a matrix or collection of pixels wherein each pixel displays a color. In a raster image, shapes are groupings of visible pixels whose color is different than the image's background color thus allowing the shape (e.g., circles, lines, arcs, etc.) to be visible to a user.

For decades, raster images have had very limited functionality in electronic systems because such systems have been unable to understand the content of raster images, which do not provide high-level structures such as text records or graphical primitives. Although text recognition in raster images has been successfully achieved by using existing optical character recognition (OCR) systems and image processing techniques, such systems and techniques have difficulty in accurately and completely finding higher-level objects such as lines, circles, arcs, polygons, etc.

Today, relatively expensive and time-consuming methods are now being used to make raster images more useful in electronic systems. One exemplary approach is to manually re-author raster images into vector format. However, the process involved with manually re-authoring even a single raster image typically requires many hours. Considering the multitude of existing technical drawings for which it would be desirable to convert to vector format, manually re-authoring so many raster images is not practical.

Another common method is to manually create a companion graphic that contains hyperlink and hotspot information for the original raster image. However, using the best authoring tools currently available, this process requires many hours per image. Moreover, there is no known automated solution for creating companion graphics containing hyperlink and hotspot information for raster images.

Although commercially available raster-to-vector conversion computer software programs exist and have been successful for their intended purposes, it would be highly desirable to provide an automated solution that more accurately and more completely converts raster technical images to vector format.

LONG JIN ET AL: "Practical technique in conversion of engineering drawings to CAD form" INSTRUMENTATION AND MEASUREMENT TECHNOLOGY CONFERENCE, 1998. IMTC/98. CONFERENCE PROCEEDINGS. IEEE ST. PAUL, MN, USA 18-21 MAY 1998, NEW YORK, NY, USA, IEEE, US, vol. 1, 18 May 1998 (1998-05-18), pages 8-13, XP010281691 ISBN: 0-7803-4797-8 describes an automatic CAD conversion system AVSED that includes the extraction of characters from drawings using a text/graphics separation algorithm.

ZESHENG SHI ET AL: "A new input method for CAD-automatic read-in technique of paper drawings" PROCEEDINGS OF CHINA 1991 INTERNATIONAL CONFERENCE ON CIRCUITS AND SYSTEMS. PART 1, 16 June 1991 (1991-06-16), pages 431-433, XP010094101 SHENZHEN, CHINA describes a technique for reading electronic circuits automatically using recognition methods for electronic element symbols.

US 2001/0055426 describes an image processor with a first converter for extracting a line image region in input bit map image data and converts the line image to vector data, while a second converter converts bit map data of pixels in the input bit map image data around the line image of the line image region based on the bit map data of pixels around the line image region.

### SUMMARY OF THE INVENTION

In accordance with an aspect of the present invention there is provided a method and system according to the accompanying claims.

Accordingly, the inventors have recognized that a need exists in the art for devices and methods for converting network drawings from raster format to vector format in a highly accurate, complete, efficient, and automated batch process that requires little to no user intervention.

The present invention is directed to a system and method for converting a network drawing from raster format to vector format. The method generally involves recognizing text within a raster image by using optical character recognition and a character set associated with the raster image. The recognized text is extracted from the raster image to produce a text-only raster image and a text-stripped raster image. The method further includes recognizing graphic objects within the text-stripped raster image by using pattern recognition with image-specific parameters to identify graphic objects. Recognized graphic objects are represented with vector graphical primitives to produce a text-stripped vector image. Vector text elements corresponding to the extracted text are added into the text-stripped vector image to produce a vector image that is substantially identical in appearance to the raster image.

Further areas of applicability of the present invention will become apparent from the detailed description provided hereinafter. It should be understood that the detailed description and specific examples, while indicating at least one preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a simplified block diagram of a system in accordance with a preferred embodiment of the present invention;
Figure 2 is an exemplary raster wiring image that may be provided as input to the system shown in Figure 1;
Figure 3 is a flowchart of the steps performed during a method for converting a network drawing from raster format to vector format in accordance with a preferred embodiment of the present invention;
Figure 4 is a text-only raster image produced by system shown in Figure 1 while converting the raster wiring image shown in Figure 2;
Figure 5 is a text-stripped raster image produced by the system shown in Figure 1 while converting the raster wiring image shown in Figure 2;
Figure 6 is an exemplary raster image fragment in which six binary large objects have been identified, wherein each binary large object (BLOB) will be transformed by the system shown in Figure 1 from a pixel grouping into a corresponding vector object;
Figure 7 is an illustration of an exemplary pixel run;
Figure 8A is an illustration of fifteen (15) pixel runs that can be merged to form the single two-dimensional pixel run shown in Figure 8B;
Figure 8B is an illustration of the single two-dimensional pixel run formed from the merger of the fifteen (15) pixel runs shown in Figure 8A;
Figure 9 is an illustration of a collection of eleven pixel runs forming an exemplary oblique line;
Figure 10 is an illustration of the horizontal, vertical and oblique lines discovered by the system shown in Figure 1 while performing an initial line recognition step on the text-stripped raster image shown in Figure 5;
Figures 11A, 11B, 11C, and 11D are illustration of various stages of a binary large object repair process performed by the system shown in Figure 1;
Figure 12 is an illustration of various binary large objects recognized by the system shown in Figure 1 while performing a binary large object recognition step on the text-stripped raster image shown in Figure 5;
Figure 13 is an illustration of four "noisy" pixel runs that can be ignored during recognition of the horizontal line;
Figures 14A, 14B and 14C, respectively, are illustrations of an exemplary hollow triangle in raster format, in vector format, and the vector triangle overlaying the raster triangle;
Figures 15A and 15B, respectively, are illustrations of an exemplary solid circle in raster format and in vector format;
Figure 16 is a text-stripped vector image produced by the system shown in Figure 1 from the text-stripped raster image shown in Figure 5; and
Figure 17 is a vector image produced by the system shown in Figure 1 from the raster wiring image shown in Figure 2.

Corresponding reference characters indicate corresponding features throughout the drawings.

### DETAILED DESCRIPTION OF THE PREFERRED EMBODIMENTS

The following description of the preferred embodiment(s) is merely exemplary in nature and is in no way intended to limit the invention, its application, or uses.

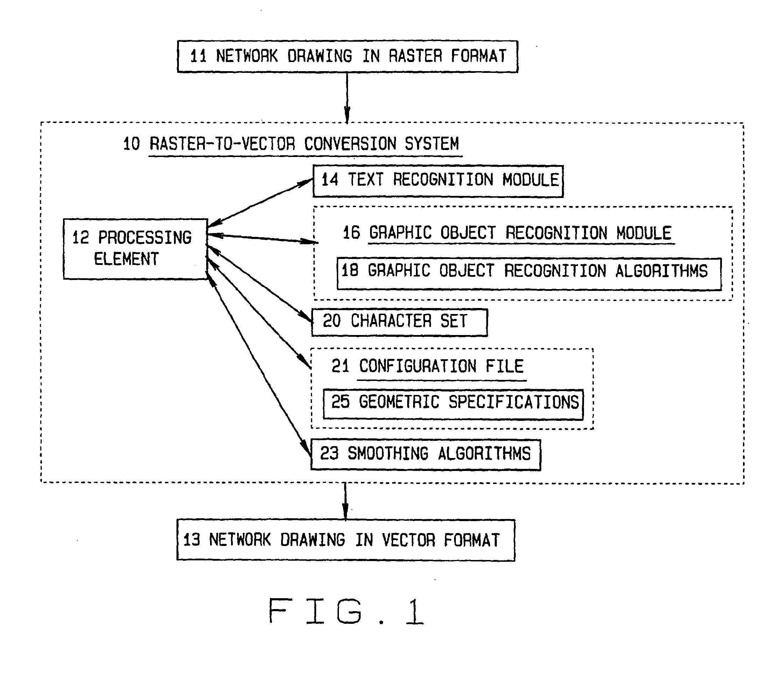

Referring to Figure 1, there is shown a system 10 in accordance with a preferred embodiment of the present invention. Generally, the system 10 converts network drawings 11 from raster format to vector format 13 in a substantially automated batch process during which the system 10 accesses data specific to the particular type of network drawing being converted. The system 10 converts the network drawings from raster format to vector format by accessing image-specific parameters including a specially built character set 20 to recognize text and geometric specifications 25 to recognize graphic objects. Upon completion of the raster-to-vector conversion, the usability of the information in the original raster image is dramatically improved in that the vectorized network drawing is suitable for intelligent graphics processing, which provides advanced and efficient user interaction, electronic linking, signal path tracing, electronic simulations, text searching, database integration, automatic zooming and panning, among other functional capabilities. As used herein, the term "network drawing" refers to and includes drawings depicting various symbols organized and interconnected by lines (e.g., horizontal, vertical, oblique) accordingly to show the relationship between the symbols. By way of example only, the network drawings include, but are not limited to, wiring diagrams, schematics, logic flow diagrams, blue prints, etc.

As shown in Figure 1, the system 10 includes a suitable processing element 12 for performing the various operations during the raster-to-vector conversion. The processing element 12 is typically comprised of a combination of hardware (e.g., one or more microprocessors, other processing devices) and software that is stored by memory and executed by the hardware. In the illustrated embodiment, the processor 12 executes a text recognition program or software module 14, a graphic object recognition program or software module 16, graphic object recognition algorithms 18, and smoothing algorithms 23. However, it should be understood that the processing element 12 can be comprised of other combinations of hardware, software, firmware or the like so long as the resulting combination is capable of implementing the various operations required for the raster-to-vector conversion, each of which are described in greater detail below.

The system 10 also includes memory which may take the form of any suitable computer readable storage device. For example, the memory may comprise read only memory (ROM), random access memory (RAM), video memory (VRAM), hard disk, floppy diskette, compact disc (CD), an optical disk, magnetic tape, a combination thereof, etc. The memory may comprise computer readable media for storing such items as program code, software packages, programs, algorithms, information, data, files, databases, applications, among other things.

In the embodiment shown in Figure 1, the system 10 includes the text and graphic object recognition modules 14 and 16 that are executable by the processing element 12. The graphic object recognition module 16 includes a plurality of graphic object recognition algorithms 18 (e.g., horizontal line recognition algorithm, vertical line recognition algorithm, oblique line recognition algorithm, binary large object (BLOB) recognition algorithm, solid circle recognition algorithm, hollow triangle recognition algorithm, arc recognition algorithm, among others). Each algorithm 18 recognizes a specific type of object or graphical construct that is made up of one or more known graphical primitives. Altogether, the algorithms 18 are tailored to search for the various graphic objects and specific content that may be contained in a network drawing. The text and graphic object recognition modules 14 and 16, the graphic object recognition algorithms 18, and the smoothing algorithms 23 may be embodied in computer-readable program code stored in one or more computer-readable storage media operatively associated with the system 10.

It is to be understood, however, that the computer readable program code described herein can be conventionally programmed using any of a wide range of suitable computer readable programming languages that are now known in the art or that may be developed in the future. It is also to be understood that the computer readable program code described herein can include one or more functions, routines, subfunctions, and subroutines, and need not be combined in a single package but may instead be embodied in separate components. In addition, the computer readable program code may be a stand-alone application, or may be a plug-in module for an existing application and/or operating system. Alternatively, the computer readable program code may be integrated into an application or operating system. In yet another embodiment, the computer readable program code may reside at one or more network devices (not shown), such as an administrator terminal, a server, etc.

Although the present invention is described with the text and graphic object recognition modules 14 and 16, graphic object recognition algorithms 18 and the smoothing algorithms 23 having a direct effect on and direct control of the system 10, it should be understood that it is the instructions generated by the execution of the programs 14, 16, 18, and 23 by the processing element 12, and the subsequent implementation of such instructions by the processing element 12, that have direct effect on and direct control of the system 10.

The system 10 further includes image-specific information for the set of network drawings being vectorized, which is accessed during the execution of the text and graphic object recognition modules 14 and 16, respectively. As shown, the system 10 includes the specially built textual character set 20 that is accessed by the processing element 12 during text recognition. Because raster images of network drawings can vary significantly depending on the authoring or scanning system that was used to generate the raster images, the system 10 also includes the configuration file 21. The configuration file 21 contains geometric specifications 25, domain specific constraints, data and other information about the specific set of raster images such as the approximate size of the raster images, the approximate sizes of certain objects (e.g. circles or lines), the relative locations of certain objects, among other data.

With further reference to Figure 1, the system 10 also includes one or more noise smoothing algorithms 23. The noise smoothing algorithms 23 are used throughout the graphic object recognition process 50 to determine which pixels in the raster image are noise and thus can he ignored without losing any information.

During operation, the system 10 performs many iterations during the translation from raster to vector format. With each iteration, more of the raster image is translated by the system 10 to vector format and no longer needs to be analyzed by the system 10.

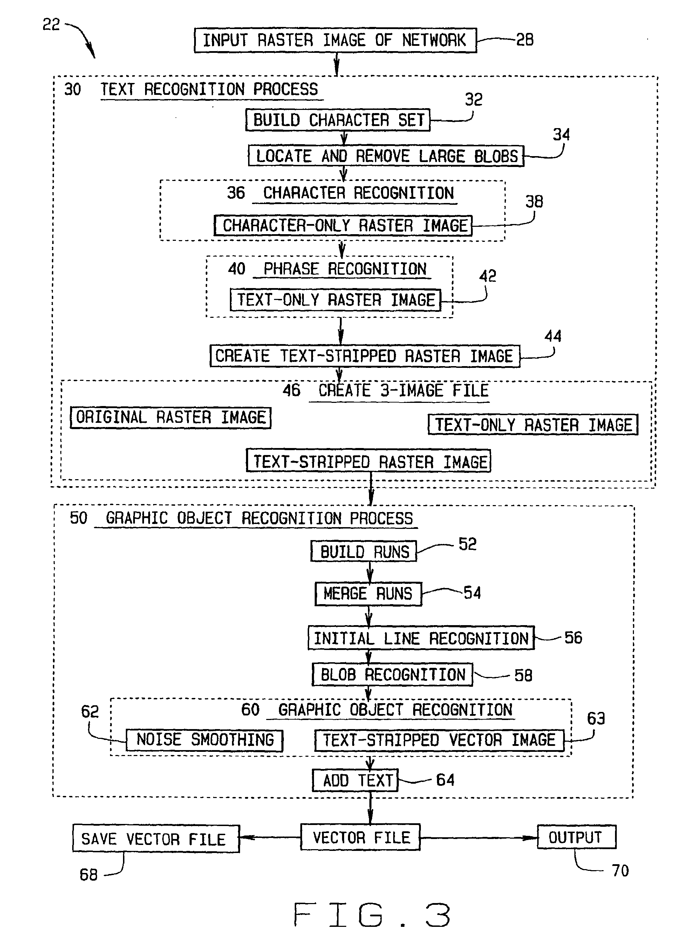

Referring now to Figure 3, a preferred method 22 implemented by the system 10 is illustrated in simplified flow chart form. As shown, step 28 comprises inputting the raster network image 11 (*i.e.,* the network drawing in raster format) into the system 10.

After the raster image 11 has been inputted, the system 10 executes the text recognition module 14 and performs a text recognition process 30 on the raster image 11. The text recognition process 30 generally comprises using the character set 20, image processing and optical character recognition (OCR) to scan the raster image 11 for textual characters (e.g., alphanumeric characters, etc.) and certain technical and mathematical notations such as "±" and "Ω." In an preferred embodiment, system 10 executes Cartouche® OCR computer software from RAF Technology, Inc. of Redmond, Washington during the text recognition process 30.

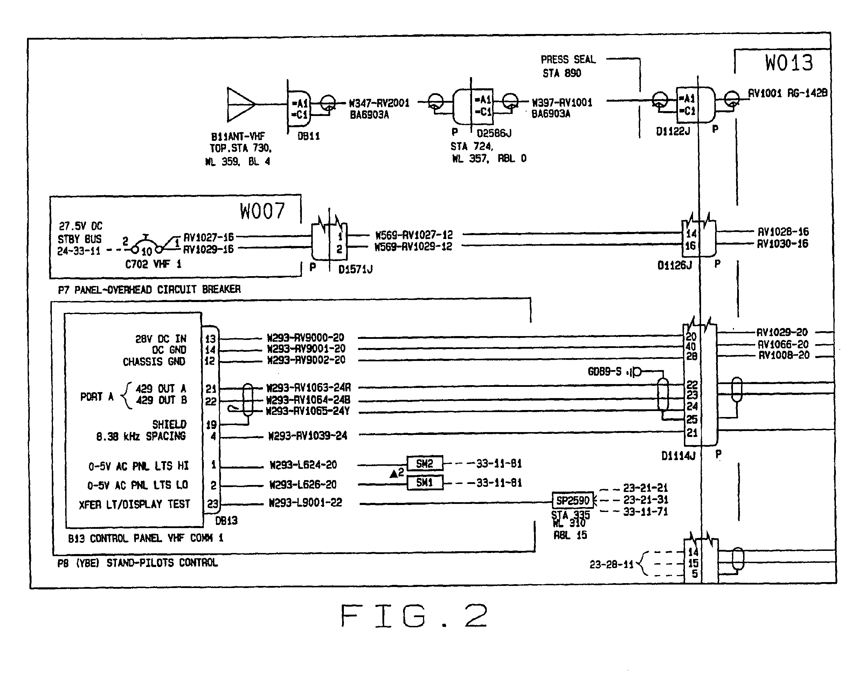

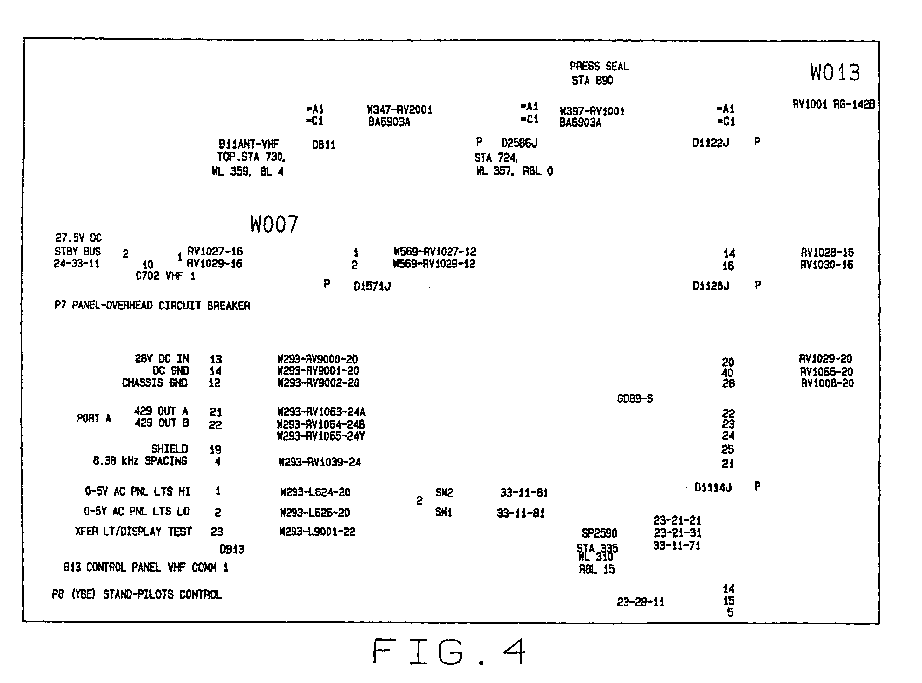

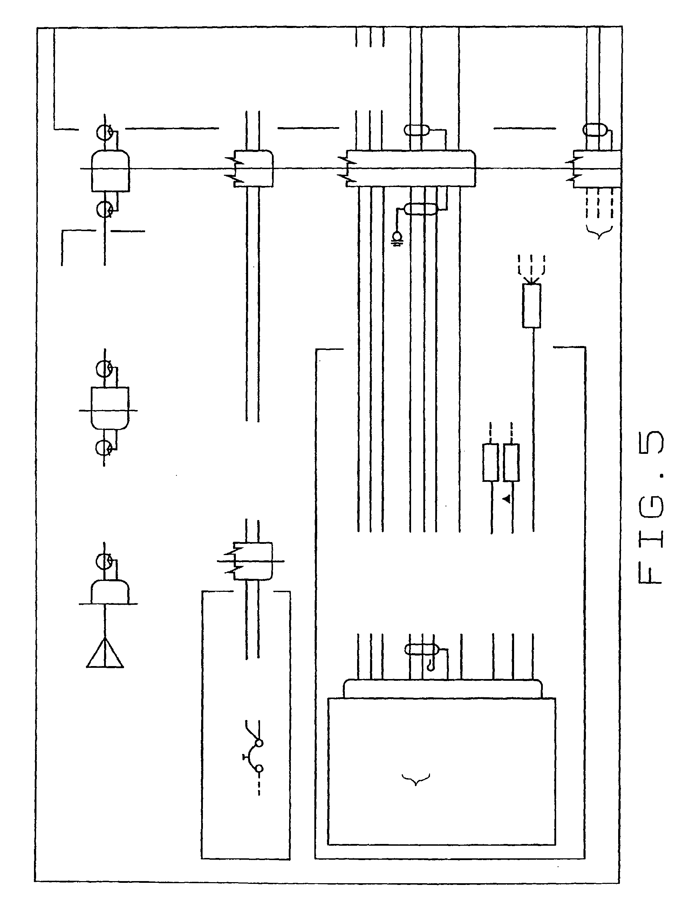

Once found, the textual characters are appropriately concatenated to form words and phrases. The textual information is then extracted to produce a text-only raster image and a text-stripped raster image. More specifically, the textual information is stored separately from the original raster image 11 to produce a first raster image containing only the textual characters (e.g., letters, words, phrases, numbers, diagrammatic notations, etc.). The pixels that formed the textual characters are then effectively erased from the original raster image 11 to produce a second raster image containing everything in the original raster image except the text. Accordingly, the first and second raster images are referred to herein as the "text-only raster image" and the "text-stripped raster image", respectively, for ease of identification and description and not for purposes of limitation. Figures 4 and 5 show exemplary text-only and text-stripped raster images, respectively, that are produced by the system 10 while converting the raster wiring image shown in Figure 2 to vector format.

Referring back to Figure 3, the text recognition process 30 of the preferred method 22 comprises the following steps. At step 32, the specialized character set 20 (Figure 1) is built for the particular set of raster image(s) being converted. If more than one unique set of raster images are being converted, it may be necessary to build a specialized character set for each unique set of images depending on their content. The content may, for example, vary based upon the type of network drawings and the imaging and/or authoring system that was used to produce the original raster images.

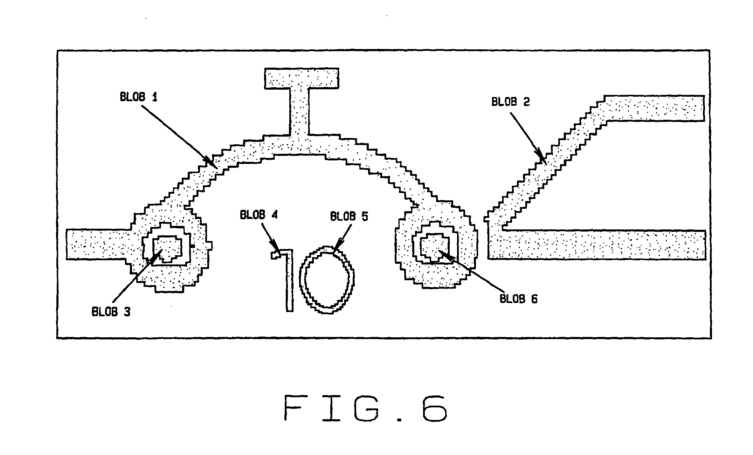

At step 34 (Figure 3), the system 10 locates binary large objects or blobs on the raster image 11 that are too large to be characters so that the large blobs may be ignored during the text recognition process 30. Ignoring the large blobs during the text recognition process 30 substantially improves the processing speed and accuracy of the system 10 during the text recognition process 30. As used herein, a "binary large object" or "blob" refers to and includes a grouping of all visible pixels that are joined or connected, either horizontally, vertically or diagonally, to one or more other visible pixels in the grouping. A visible pixel is a pixel whose color is different than that of the background color of the image. In Figure 6, there is shown an illustration of an exemplary raster image fragment in which six binary large objects have been identified. It should be noted, however, that a typical network drawing in raster format may include thousands of binary large objects.

With further reference to Figure 3, step 36 comprises character recognition during which the system 10 runs a character recognition engine on the remaining "small" blobs (i.e., those blobs that were not removed at step 34). During step 36, the system 10 accesses the data within the character set 20 to determine whether a blob is a character. For each blob, a confidence number is returned indicating how well the blob matches an entry in the character set 20. Each blob having a sufficiently high enough confidence number is then copied onto a blank image, thus creating a character-only image 38.

Step 40 comprises phrase recognition during which the system 10 runs a phrase recognition engine on the character-only image 38 to generate a text-only raster image 42, such as the exemplary text-only raster image shown in Figure 4. During step 40, the system 10 groups the characters recognized at step 36 into word and phrase entities and then creates bounding boxes surrounding the word and phrase entities. The bounding boxes provide location and size information for the word and phrase entities.

At step 44, a text-stripped raster image is created by scrubbing or erasing from the raster image 11 the pixels within the bounding boxes (i.e., the pixels forming the words and phrase entities recognized at step 40). Figure 5 shows an exemplary text-stripped image produced by the system 10 while converting the exemplary raster wiring image shown in Figure 2 to vector format. A comparison of Figures 2 and 5 demonstrates how removing the text first greatly simplifies the difficulty associated with finding graphical primitives in a raster image.

At step 46 (Figure 3), the original raster image, the text-stripped raster image, and the text-only raster image are saved in a single file. Accordingly, there will be one such file for every raster image being converted to vector format by the system 10.

Upon completion of the text recognition process 30, the system 10 executes the graphic object recognition module 16 and performs a graphic object recognition process 50. The input for the graphic object recognition process 50 comprises the text-stripped raster image produced during the text recognition process 30.

During the graphic object recognition process 50, the system 10 preferably executes the graphic object recognition algorithms 18 (Figure 1) in an order such that the simpler or less ambiguous graphic objects (graphic objects that are less likely to be misidentified) (e.g., long horizontal or vertical lines, etc.) are recognized in the text-stripped raster image before the increasingly complex or more ambiguous graphic objects (e.g., very short oblique lines, very small arcs, etc.) are recognized. The system 10 stores the vector graphical primitives of the less ambiguous graphic objects and eliminates their pixels from further processing before the system 10 recognizes the increasingly complex or more ambiguous graphic objects.

As graphic objects are recognized and their vector graphical primitives stored, the text-stripped raster image will increasingly have less pixels requiring analysis. Therefore, finding the less ambiguous graphic objects first and eliminating their pixels makes it far less likely that errors will occur when identifying the more ambiguous graphic objects in the text-stripped raster image.

The corresponding graphic object recognition algorithms for identifying the less ambiguous graphic objects have highly constrained pattern-matching rules. Conversely, the more ambiguous graphic objects are identified by graphic object recognition algorithms that have less constrained pattern-matching rules. For example, a blob forming a solid circle may be found with an algorithm that has many rules including: (1) the blob must have a square bounding box, (2) there can be no holes in the blob (the pixel runs, which are described in detail below, must each touch the edge of the circle), (3) beginning from the top of the blob, the pixel runs must increase in length until the circle middle is reached at which point the pixel runs must decrease until the bottom of the circle is reached, and (4) the horizontal midpoint of each pixel run must be very close to the x-value of the circle's center. Thus, solid circles are one of the less ambiguous graphic objects to identify, whereas arcs can be very ambiguous and accordingly are recognized much later than solid circles.

The graphic object recognition algorithms 18 access the image-specific parameters (e.g., geometric specifications 25) within the configuration file 21, as necessary, to accurately identify a blob as a match. As different sets of network drawings are processed, the configuration file 21 will change and may even require the addition of new and different parameters therein.

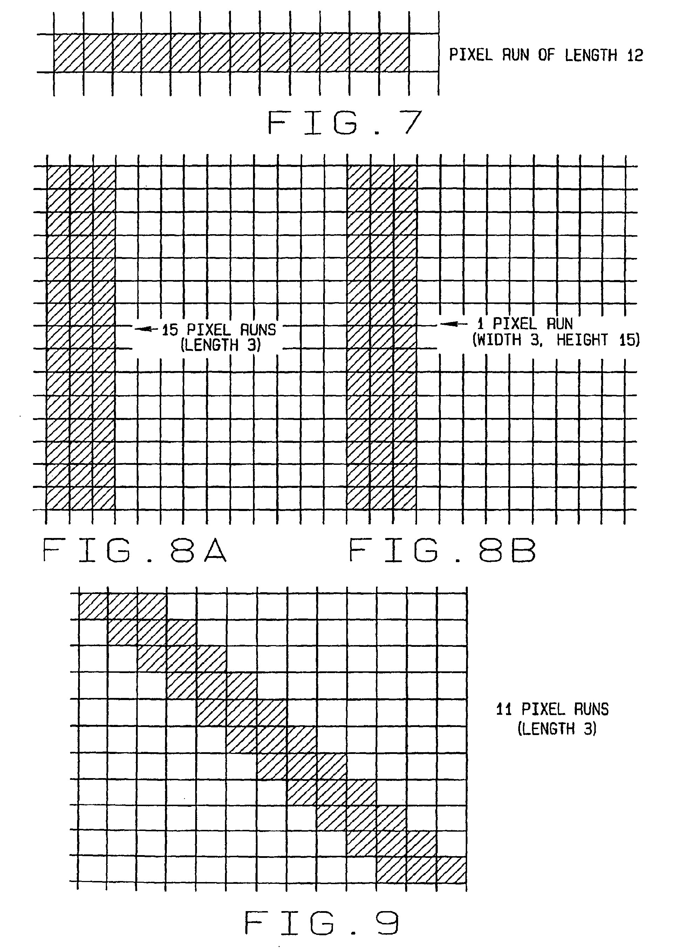

In the preferred method 22 shown in Figure 3, the graphic object recognition process 50 comprises the following steps. At step 52, the system 10 builds a list of pixel "runs" from the text-stripped raster image within the three-image file created at step 46. As used herein, a "pixel run" is a grouping of pixels that are adjacent horizontally and share the same y-coordinate, as shown in Figure 7. The initial runs built at step 52 each have a height of one (1) pixel but may have varying lengths or widths depending on how many adjacent pixels are found. A typical network drawing in raster format may include tens of thousands of pixel runs.

At step 54, the pixel runs having identical x-coordinates and adjacent y-coordinates are merged to create two-dimensional pixel runs. This step improves performance by significantly reducing the number of pixel runs that must be analyzed by the graphic object recognition software. A typical raster wiring image may start with one hundred thousand (100,000) pixel runs. The pixel run merging process will typically reduce the number of pixel runs by sixty percent (60%) or more. Merging pixel runs also simplifies the coding of the graphic object recognition algorithms 18. When a pixel run is merged with another run it is removed from the list of runs. The remaining run is modified so that it is now "thicker" or "taller" than it was before the merge (*i*.*e*., it is now a two-dimensional pixel run). For example, Figure 8A shows fifteen (15) pixel runs, each having a width or length of three (3) pixels and height of one (1) pixel, that can be merged to form the single two-dimensional pixel run having a width of three (3) pixels and a height of fifteen (15) pixels, which is shown in Figure 8B.

Step 56 (Figure 3) comprises initial line recognition during which the system 10 performs an iterative process over the list of pixel runs to locate pixel runs having a relatively large width or height. If a pixel run is located that is relatively tall (i.e., has a large height) and narrow (i.e., has a very small width), the system 10 creates a vertical line for the pixel run and the pixel run is eliminated from the run list. For example, the merged run shown in Figure 8B can be eliminated from the run list after a corresponding vertical line is created with a height of fifteen (15) pixels and a line thickness of three (3) pixels. If a pixel run is relatively wide and not too tall, a horizontal line can be created for the pixel run and it can be eliminated from the run list. Horizontal lines are merged runs whose widths exceed their heights while meeting a minimum length requirement, whereas vertical lines are merged runs whose heights exceed their widths while meeting a minimum length requirement.

It should be noted that the resolution for the raster images being vectorized may vary depending on the particular application in which the present invention is being used. Likewise, the determination of when a pixel run should be substituted with a horizontal or vertical line will also vary depending on the particular application in which the present invention is being used. By way of example only, a long horizontal line might be required to be at least five to ten percent (5-10%) of the width of the entire image.

For oblique lines, the oblique line recognition algorithm considers runs with very small widths and heights. More specifically, the oblique line recognition algorithm begins looking for adjacent runs in the y-direction that are very close to the same length and that are shifted to the left or to the right by a small amount. The oblique line recognition algorithm continues looking for the next pixel run that is adjacent in the y-direction to the last pixel run found and that is shifted by the same small amount in the same direction. This process of adding pixel runs to the collection is continued as long as the lengths of the pixel runs continue to be very close and the shift direction and shift size continue to be consistent. When the system 10 cannot find another pixel run to add to the run collection, a determination is made as to whether the resulting oblique line is sufficiently long to allow for the creation of an oblique line and removal of the run collection from the run list. Figure 9 shows an exemplary collection of eleven (11) pixel runs of length three (3) pixels (width = 3, height = 1) that form an oblique line. As just described, the eleven pixel runs are removed from the list of runs after an oblique line is created for the eleven pixel runs.

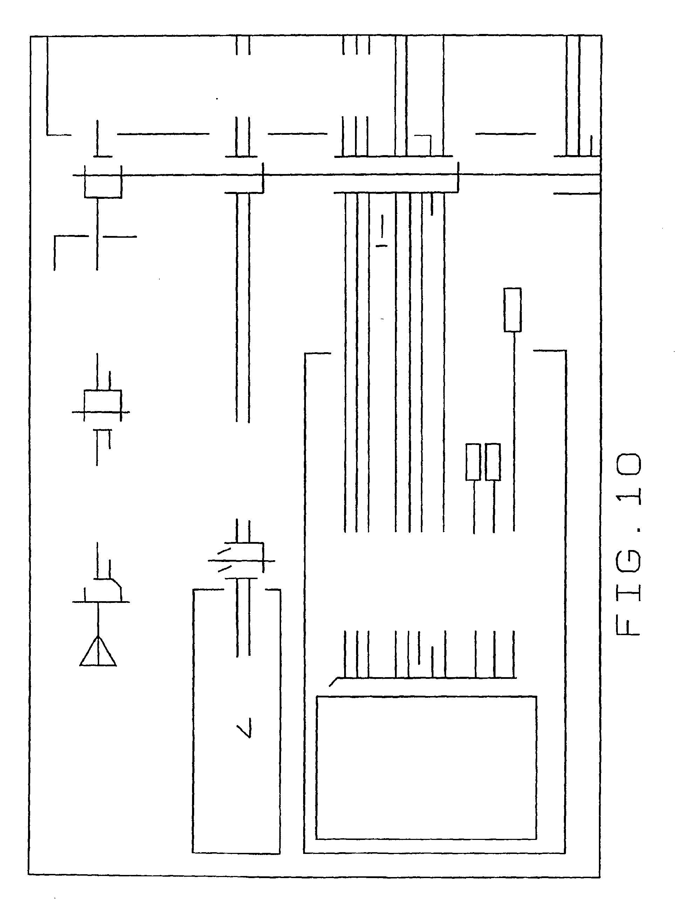

It should be noted that the dimensional requirements for each type of line (e.g., horizontal, vertical, oblique, etc.) are specified in the configuration file 21 and can be changed for different sets of raster images. Figure 10 shows the horizontal, vertical and oblique lines that were discovered during the initial line recognition step 56 performed by the system 10 on the text-stripped raster image shown in Figure 5.

Referring back to Figure 3, step 58 comprises blob recognition wherein the system 10 locates and then stores blobs. At step 58, the system 10 iterates over the remaining pixel runs in the pixel run list (i.e., the pixel runs not eliminated during the initial line recognition step 56) to find and group the pixel runs that are overlapping in the horizontal, vertical or diagonal direction. Step 58 comprises creating a blob with the first pixel run in the pixel run list and then adding the pixel runs that are connected to any pixel runs already in the blob. Pixel runs, which are added to the blob, are removed from the pixel run list. Accordingly, the blob continues to grow until no more connecting pixel runs are found. A new blob is then started with the pixel run now first in the pixel run list. The new blob is grown until no more connecting pixel runs can be found for the new blob. The process of creating blobs with the first pixel run in the pixel run list and then growing the blobs continues until every unused pixel run is put into a blob.

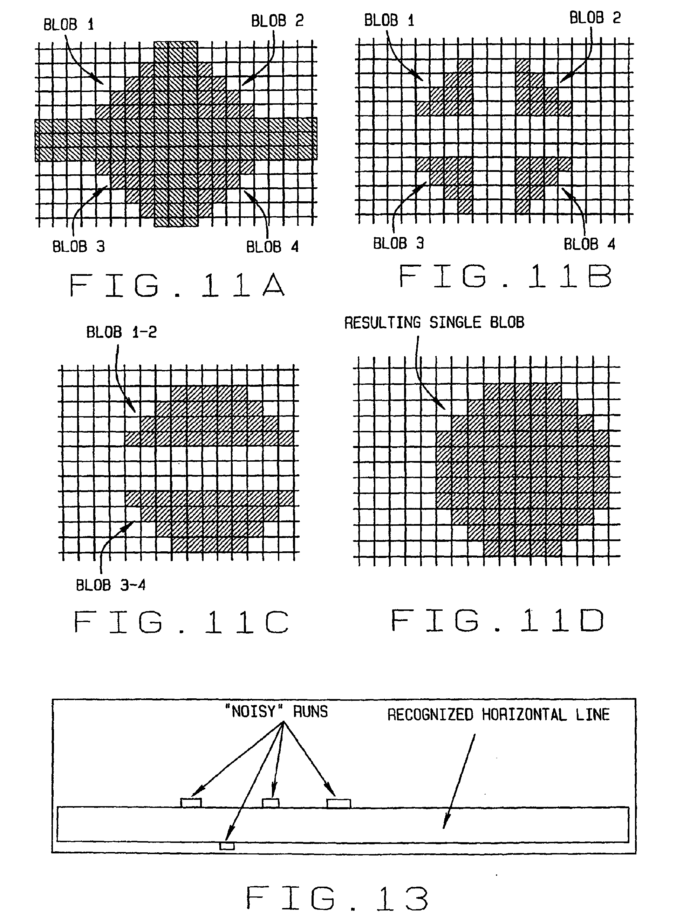

The pixel removal during the initial line recognition step 56 may have caused one or more blobs to be split up into several blobs. To merge a split blob back into a single blob, the blob recognition algorithm recovers the pixels removed during the initial line recognition step 56 that caused the blob to split. Figure 11A, 11B, 11C, and 11D illustrate various stages of a blob repair process. More specifically, Figure 11A shows a gray-patterned area of pixels that must be recovered to merge the four blob portions back into a single blob. Figure 11C shows the merger of the upper blob portions and the merger of the lower blob portions. Figure 11D shows the completely merged blob when the horizontal line's pixels are restored.

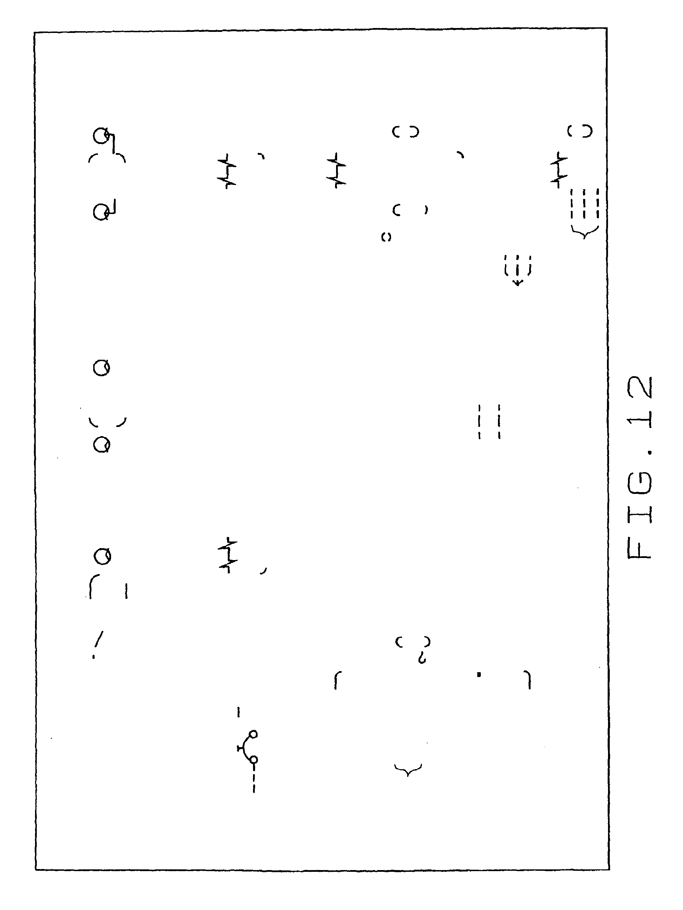

Upon completion of the blob recognition step 58, a set of blobs exists that can be recognized by the graphic object recognition algorithms 18 and successfully translated into vector graphical primitives by the system 10. Figure 12 shows the numerous blobs recognized by the system 10 during the blob recognition step 58 for the text-stripped raster image shown in Figure 5.

Step 60 (Figure 3) comprises graphic object recognition during which the system 10 executes the various graphic object recognition algorithms 18 over the list of blobs recognized at step 58 and matches the blobs to their corresponding graphic object. As previously described, the algorithms 18 are preferably run in an order from the most constrained to the least constrained such that the less ambiguous graphic objects are recognized before the more ambiguous graphic objects.

When an object match for a blob is found, the appropriate vector graphical primitive(s) is stored and the blob is removed from the list of blobs. After all of the graphic object recognition algorithms 18 have been run, the pixels forming each blob will have been replaced by the appropriate vector graphical primitive(s).

Throughout the graphic object recognition step 60, noise smoothing (step 62) is preferably performed via the system's 10 execution of the noise smoothing algorithms 23 (Figure 1). The noise smoothing step 62 determines when a pixel run is "noise" and thus can be ignored without losing any information. At step 62, the smoothing is performed over relatively small areas of the text-stripped raster image. For example, the system 10, while running an arc recognition algorithm, will consider a number of (i.e., one or more) pixel runs to be noise when a relatively low ratio exists between the number of pixels forming the suspected noisy pixel runs to the total number of pixels making up the blob suspected of being an arc. However, if the ratio is too high then the blob will not be identified as an arc. Figure 13 shows four "noisy" pixel runs that can be removed during recognition of a horizontal line without losing any information.

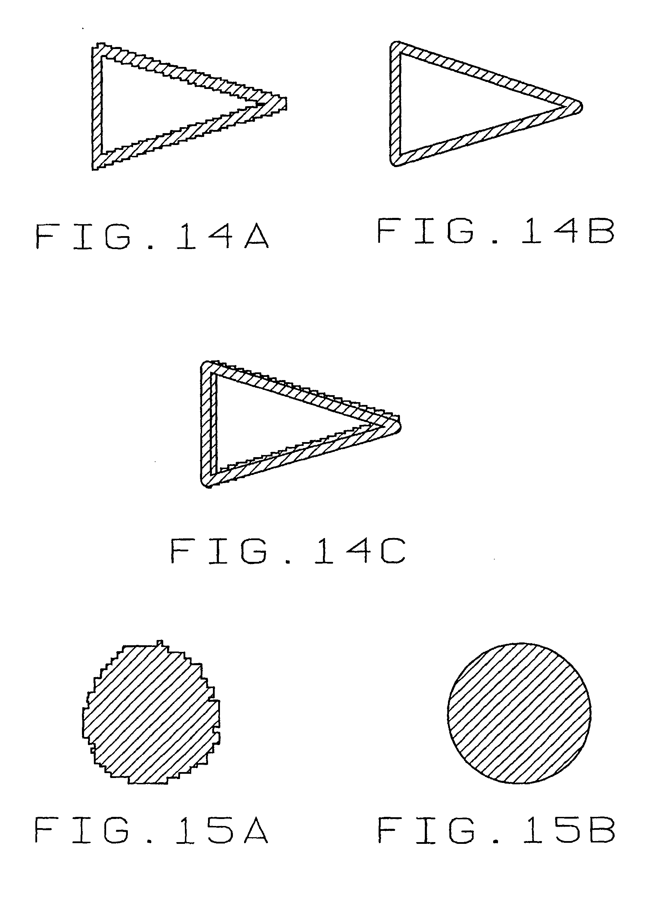

Referring now to Figure 14, there is shown an exemplary hollow three-point polygon (i.e., a triangle) in raster format (Figure 14A) and in vector format (Figure 14B). Figure 14C shows an overlay of the raster triangle with the converted vector graphical primitive (i.e., a 3 point polygon). As shown, the raster triangle is represented by 291 pixels and is encoded using 88 pixel runs, whereas the vector triangle is represented with a single graphical primitive, i.e., a 3-point polygon.

Figure 15 shows an exemplary solid circle in raster format (Figure 15A) and in vector format (Figure 15B). As shown, the raster circle is represented by 512 pixels and is encoded using 30 pixel runs, whereas the vector circle is represented with a single graphical primitive, i.e., a circle.

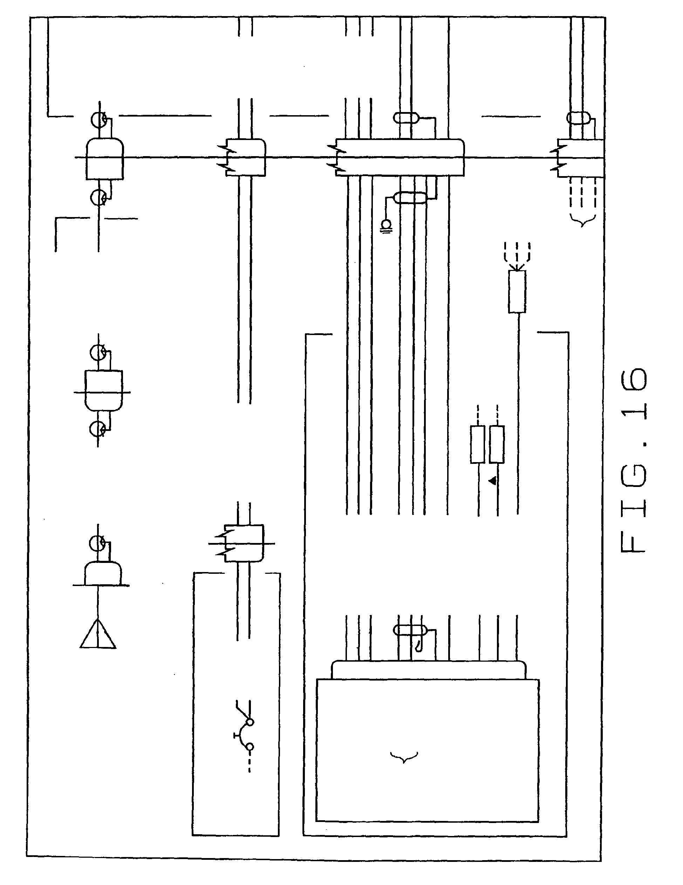

Upon completion of the graphic object recognition step 60 (Figure 3), each of the vector graphical primitives that correspond to the recognized blobs are included in a text-stripped vector image 63. An exemplary text-stripped vector image is shown in Figure 16. Although the text-stripped images shown in Figures 5 and 16, respectively, appear substantially identical, the underlying representations are vastly different in that Figure 5 is encoded with pixels whereas Figure 16 is encoded with vector graphical primitives.

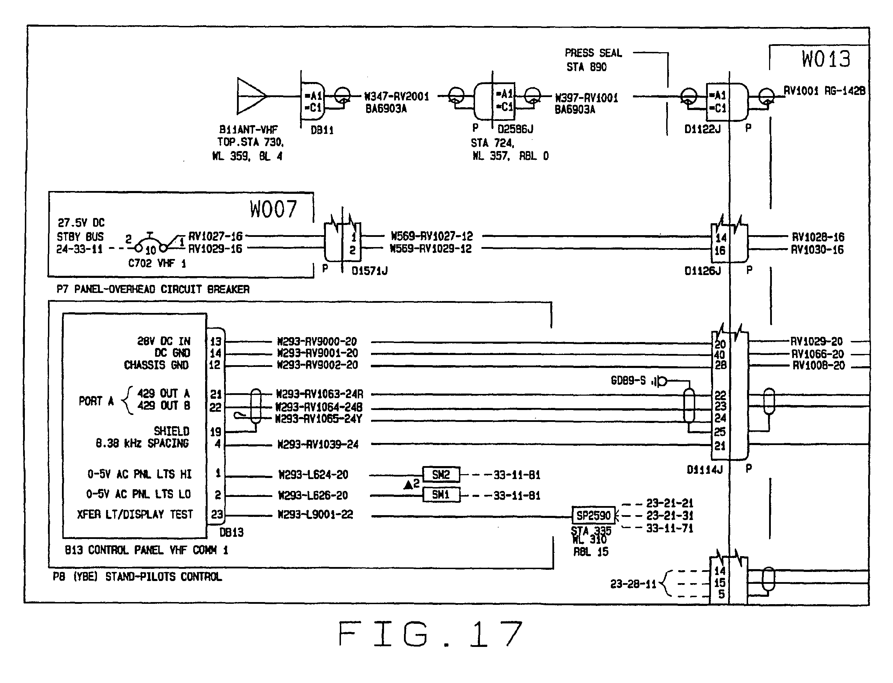

At step 64 (Figure 3), the system 10 reintroduces or adds as vector text elements the text found and stripped from the original raster image during the text recognition process 30 into the text-stripped vector image 63, thus creating a vector file. The vector file contains the text identified during the text recognition process 30 and the graphical primitives identified during the graphic object recognition process 50. Figure 17 shows an exemplary vector image that may be contained within a vector file produced by the system 10 while converting the exemplary raster wiring image shown in Figure 2. As evident from a comparison of Figures 2 and 17, the vector image (Figure 17) is substantially identical in appearance to the raster image (Figure 2). However, the underlying representations are vastly different in that Figure 2 is encoded with pixels, whereas Figure 17 is encoded with vector text elements and vector graphical primitives.

By way of example, the vector files produced by the system 10 may be encoded in a file format called Computer Graphic Metafile (CGM), a widely-used technical illustration format file. Alternatively, however, other languages and file formats may also be used to encode the vector files produced by the system 10 including, but not limited to, DWG format, document exchange format (DXF) and initial graphics exchange specification (IGES) format.

Upon completion of the graphic object recognition process 50, the vector file may be saved on a suitable computer readable medium at step 68, as shown in Figure 3. Alternatively, or additionally, the vector file may be output at step 70, for example, to a graphical display.

The system 10 preferably comprises a batch conversion processor such that the raster-to-vector conversion process requires minimal human intervention and no manual re-authoring of the raster images. Accordingly, the present invention provides a more practical and cost-effective solution for converting network drawings from raster format to vector format than that presently recognized in the art.

By more accurately, completely and efficiently converting network diagrams and schematics from raster format to vector format, the present invention dramatically improves the usability of the information in the network drawings. After being converted to vector format in accordance with the present invention, the network drawing is suitable for intelligent graphics processing that enables advanced and efficient user interaction, electronic linking, signal path tracing, electronic simulations, automatic zooming and panning, among other functional capabilities, etc.

Moreover, the present invention also enables automatic text searching in network drawings that is comparable to the automatic text searching capabilities associated with HTML (hypertext markup language) documents. Enabling automatic text searching in network drawings allows for substantial time reductions to be realized in the performance of troubleshooting tasks.

The present invention also eliminates, or at least reduces, the need for storing and delivering paper-based network drawings in that paper-based network drawings can be scanned to create raster images thereof, which are then efficiently converted by the present invention to vector format. Additionally, the present invention also allows for significant reductions in maintenance costs because authors, illustrators and maintainers will not have to maintain raster data after its conversion to vector format. Moreover, converting network drawings from raster format to vector format will reduce costs of electronic drawing deliveries because vector graphics require less computer storage space than the pixel matrices of raster images.

It is anticipated that the invention will be applicable to any of a wide range of network drawings including, but not limited to, wiring diagrams, schematics, logic flow diagrams, blue prints, etc. Accordingly, the specific references to raster wiring images and wiring diagrams herein should not be construed as limiting the scope of the present invention, as the invention could be applied to convert network drawings from raster format to vector format regardless of whether the network drawings include wiring or non-wiring data.

The description of the invention is merely exemplary in nature and, thus, variations that do not depart from the substance of the invention are intended to be within the scope of the invention. Such variations are not to be regarded as a departure from the scope of the invention.

## Claims

1. A method for converting network drawings (11) from raster format to vector format, the method comprising:
recognizing text within a raster image by using optical character recognition and a character set (20) associated with the raster image, the raster image comprising a network drawing (11) in raster format;
extracting the recognized text to produce a text-only raster image (42) and a text-stripped raster image (44);
recognizing graphic objects within the text-stripped raster image (44) by using pattern recognition and image-specific parameters associated with the raster image,
using vector graphical primitives corresponding to the recognized graphic objects to produce a text-stripped vector image;
adding vector text elements corresponding to the extracted text into the text-stripped vector image to produce a vector image substantially identical in appearance to the raster image;
**characterised in that** the recognizing graphic objects within the text-stripped raster image comprises:
building (52, 54) a list of two-dimensional pixel runs, wherein a pixel run is a group of pixels that are adjacent horizontally and share the same y-coordinate, and the pixel runs having identical x-coordinates and adjacent y-coordinates are merged to create the two dimensional pixel run;
recognizing lines (56) from the list of two-dimensional pixel runs;
removing from the list of two-dimensional pixel runs the pixel runs recognized as lines;
recognizing binary large objects from the list of two-dimensional pixel runs; and
recognizing graphic objects from the recognized binary large objects by matching each binary large object with its corresponding vector graphical primitive.

2. The method of claim 1, wherein recognizing graphic objects within the text-stripped raster image comprises recognizing long horizontal or vertical lines before recognizing short oblique lines or very small arcs.

3. The method of claim 1 or 2, wherein recognizing graphic objects within the text-stripped raster image comprises noise smoothing.

4. The method of claim 1, wherein building (52, 54) a list of two-dimensional pixel runs comprises:
removing the pixel runs merged with another pixel run from the list of two-dimensional pixel runs.

5. The method of claim 1 or 4, further comprising repairing binary large objects split by pixel removal during line recognition.

6. The method of any of claims 1-5, further comprising defining the image-specific parameters.

7. The method of claim 1, wherein the raster image comprises a wiring diagram in raster format.

8. A system (10) for converting network drawings (11) from raster format to vector format, the system comprising:
a computer executable module (12) for recognizing text within a raster image by using optical character recognition and a character set (20) associated with the raster image, the raster image comprising a network drawing (11) in raster format;
a computer executable module (12) for extracting the recognized text to produce a text-only raster image (42) and a text-stripped raster image (44);
a computer executable module (12) for recognizing graphic objects within the text-stripped raster image (44) by
using pattern recognition and image-specific parameters associated with the raster image,
a computer executable module (12) for using vector graphical primitives corresponding to the recognized graphic objects to produce a text-stripped vector image;
a computer executable module (12) for adding vector text elements corresponding to the extracted text into the text-stripped vector image to produce a vector image substantially identical in appearance to the raster image;
**characterized by** the computer executable module (12) for recognizing graphic objects within the text-stripped raster image comprises:
a computer executable sub-module for building a list of two-dimensional pixel runs, wherein a pixel run is a group of pixels that are adjacent horizontally and share the same y-coordinate and the pixel runs having identical x-coordinates and adjacent y-coordinates are merged to create the two dimensional pixel run;
a computer executable sub-module for recognizing lines from the list of two-dimensional pixel runs;
a computer executable sub-module for removing from the list of two-dimensional pixel runs the pixel runs recognized as lines;
a computer executable sub-module for recognizing binary large objects from the list of two-dimensional pixel runs; and
a computer executable sub-module for recognizing graphic objects from the recognized blobs by matching each binary large object with its corresponding vector graphical primitive.

9. The system (10) of claim 8, wherein the computer executable sub-module for recognizing graphic objects within the text-stripped raster image comprises a computer executable sub-module for recognizing long horizontal or vertical lines before recognizing short oblique lines or very small arcs.

10. The system (10) of claim 8 or 9, wherein the computer executable module for recognizing graphic objects within the text-stripped raster image comprises a computer executable sub-module for noise smoothing.

11. The system (10) of claim 8, wherein the computer executable sub-module for building a list of two-dimensional pixel runs comprises:
a computer executable sub-module for removing the pixel runs merged with another pixel run from the list of two-dimensional pixel runs.

12. The system (10) of claim 8 or 11, further comprising a computer executable module for repairing binary large objects split by pixel removal during line recognition.

13. The system (10) of any of claims 8-12, further comprising a computer executable module for defining the image-specific parameters.

14. The system (10) of any of claims 8-13, wherein the raster image comprises a wiring diagram in raster format.

15. A computer-readable medium interpretable by a computer arranged to perform the steps of claims 1 to 7.

## Patentansprüche

1. Verfahren zum Umwandeln von Zeichnungen von Netzwerken (11) von Rasterformat in Vektorformat, wobei das Verfahren folgendes umfasst:
Erkennen von Text in einem Rasterbild durch die Verwendung von optischer Zeichenerkennung und einem Zeichensatz (20), der zu dem Rasterbild gehört, wobei das Rasterbild eine Zeichnung eines Netzwerks (11) in Rasterformat umfasst;
Extrahieren des erkannten Textes, um ein Nur-Text-Rasterbild (42) und ein Rasterbild mit entferntem Text (44) zu erzeugen;
Erkennen von Grafikobjekten innerhalb des Rasterbildes mit entferntem Text (44) durch Verwendung von Mustererkennung und bildspezifischen Parametern, die zu dem Rasterbild gehören,
Verwenden von vektoriellen Grafikelementen, die den erkannten Grafikobjekten entsprechen, um einen Vektorbild mit entferntem Text zu erzeugen;
Hinzufügen von vektoriellen Textelementen, die dem extrahierten Text entsprechen, zu dem Vektorbild mit entferntem Text, um ein Vektorbild zu erzeugen, das im wesentlichen dasselbe Aussehen wie das Rasterbild hat;
**dadurch gekennzeichnet, dass** das Erkennen von Grafikobjekten innerhalb des Rasterbildes mit entferntem Text folgendes umfasst:
Erstellen (52, 54) einer Liste von zweidimensionalen Pixelverläufen, wobei ein Pixelverlauf eine Gruppe von Pixeln ist, die horizontal aneinandergrenzen und die y-Koordinaten gemeinsam haben, und die Pixelverläufe mit identischen x-Koordinaten und aneinandergrenzenden y-Koordinaten verschmolzen werden, um den zweidimensionalen Pixelverlauf zu erzeugen,
Erkennen von Linien (56) aus der Liste von zweidimensionalen Pixelverläufen;
Entfernen von zweidimensionalen Pixelverläufen aus der Liste, wobei die Pixelverläufe als Linien erkannt wurden;
Erkennen von großen Objekten aus Binärzeichen aus der Liste von zweidimensionalen Pixelverläufen; und
Erkennen von Grafikobjekten aus den erkannten großen Objekten aus Binärzeichen, indem jedes Objekt aus Binärzeichen mit seinem entsprechenden vektorgrafischen Grafikobjekt abgeglichen wird.

2. Verfahren nach Anspruch 1, bei dem das Erkennen von Grafikobjekten innerhalb des Rasterbildes mit entferntem Text das Erkennen von langen horizontalen oder vertikalen Linien vor dem Erkennen von kurzen schrägen oder sehr kleinen Bögen umfasst.

3. Verfahren nach Anspruch 1 oder 2, bei dem das Erkennen von Grafikobjekten innerhalb des Rasterbildes mit entferntem Text das Verringern von Rauschen umfasst.

4. Verfahren nach Anspruch 1, bei dem das Erstellen (52, 54) einer Liste aus zweidimensionalen Pixelverläufen folgendes umfasst:
Entfernen der Pixelverläufe, die mit einem anderen Pixelverlauf verschmolzen sind, aus der Liste von zweidimensionalen Pixelverläufen.

5. Verfahren nach Anspruch 1 oder 4, das weiter das Reparieren von großen Objekten aus Binärzeichen umfasst, die durch Pixelentfernung während der Linienerkennung geteilt worden sind.

6. Verfahren nach einem der Ansprüche 1 bis 5, das weiter das Definieren der bildspezifischen Parameter umfasst.

7. Verfahren nach Anspruch 1, bei dem das Rasterbild einen Schaltplan in Rasterformat umfasst.

8. System (10) zum Umwandeln von Zeichnungen von Netzwerken (11) von Rasterformat in Vektorformat, wobei das System folgendes umfasst:
ein von einem Computer ausführbares Modul (12), das Text innerhalb eines Rasterbildes durch Verwendung von optischer Zeichenerkennung und einem Zeichensatz (20) erkennt, der zu dem Rasterbild gehört, wobei das Rasterbild eine Zeichnung eines Netzwerks (11) in Rasterformat umfasst,
ein von einem Computer ausführbares Modul (12), das den erkannten Text extrahiert, um ein Nur-Text-Rasterbild (42) und ein Rasterbild mit entferntem Text (44) zu erzeugen;
ein von einem Computer ausführbares Modul (12), das Grafikobjekte innerhalb des Rasterbildes mit entferntem Text (44) erkennt, indem
Mustererkennung und bildspezifische Parameter, die zu dem Rasterbild gehören, verwendet werden,
ein von einem Computer ausführbares Modul (12), das vektorielle Grafikelemente verwendet, die den erkannten Grafikobjekten entsprechen, um ein Vektorbild mit entferntem Text zu erzeugen;
ein von einem Computer ausführbares Modul (12), das vektorielle Textelemente, die dem extrahierten Text entsprechen, in das Vektorbild mit entferntem Text einfügt, um ein Vektorbild zu erzeugen, das im wesentlichen dasselbe Aussehen wie das Rasterbild hat;
**dadurch gekennzeichnet, dass** das von einem Computer ausführbare Modul (12), das Grafikobjekte innerhalb des Rasterbildes mit entferntem Text erkennt, folgendes umfasst:
ein von einem Computer ausführbares Submodul, das eine Liste von zweidimensionalen Pixelverläufen erstellt, wobei ein Pixelverlauf eine Gruppe von Pixeln ist, die horizontal aneinandergrenzen und gemeinsame y-Koordinaten haben, und die Pixelverläufe mit identischen x-Koordinaten und aneinandergrenzenden y-Koordinaten verschmolzen werden, um einen zweidimensionalen Pixelverlauf zu erzeugen;
ein von einem Computer ausführbares Submodul, das Linien in der Liste von zweidimensionalen Pixelverläufen erkennt;
ein von einem Computer ausführbares Submodul, das zweidimensionale Pixelverläufe aus der Liste entfernt, wobei die Pixelverläufe als Linien erkannt worden sind;
ein von einem Computer ausführbares Modul, das große Objekte aus Binärzeichen aus der Liste von zweidimensionalen Pixelverläufen erkennt; und
ein von einem Computer ausführbares Submodul, das Grafikobjekte aus den erkannten Blobs erkennt, indem es jedes große Objekt aus Binärzeichen mit seinem entsprechenden vektoriellen Grafikelement abgleicht.

9. System (10) nach Anspruch 8, bei dem das von einem Computer ausführbare Submodul, das Grafikobjekte innerhalb des Rasterbildes mit entferntem Text erkennt, ein von einem Computer ausführbares Submodul umfasst, das lange horizontale oder vertikale Linien erkennt, bevor es kurze schrägen Linien oder sehr kleine Bögen erkennt.

10. System (10) nach Anspruch 8 oder 9, bei dem das von einem Computer ausführbare Submodul, das Grafikobjekte innerhalb des Rasterbildes mit entferntem Text erkennt, ein von einem Computer ausführbares Submodul zum Verringern von Rauschen umfasst.

11. System (10) nach Anspruch 8, bei dem das von einem Computer ausführbare Submodul, das eine Liste von zweidimensionalen Pixelverläufen erstellt, folgendes umfasst:
ein von einem Computer ausführbares Submodul, das die Pixelverläufe, die mit einem anderen Pixelverlauf verschmolzen sind, aus der Liste von zweidimensionalen Pixelverläufen entfernt.

12. System (10) nach Anspruch 8 oder 11, das weiter ein von einem Computer ausführbares Modul umfasst, das große Objekte aus Binärzeichen repariert, die durch das Entfernen von Pixeln während der Linienerkennung geteilt worden sind.

13. System (10) nach einem der Ansprüche 8 bis 12, das weiter ein von einem Computer ausführbares Modul umfasst, das die bildspezifischen Parameter definiert.

14. System (10) nach einem der Ansprüche 8 bis 13, bei dem das Rasterbild einen Schaltplan in Rasterformat umfasst.

15. Computerlesbares Medium, das von einem Computer interpretiert werden kann, der dazu eingerichtet ist, die Schritte nach den Ansprüchen 1 bis 7 auszuführen.

## Revendications

1. Procédé pour convertir des schémas de réseaux (11) du format trame en format vecteur, le procédé comprenant:
reconnaître le texte dans une image trame en utilisant une reconnaissance de caractères optiques et un ensemble de caractères (20) associé à l'image trame, l'image trame comprenant un schéma de réseaux (11) en format trame;
extraire le texte reconnu pour produire une image trame texte seulement (42) et une image trame dépouillée de texte (44);
reconnaître des objets graphiques dans l'image trame dépouillée de texte (44) en utilisant une reconnaissance de motif et des paramètres spécifiques à l'image associés à l'image trame,
utiliser des primitives graphiques de vecteur correspondant aux objets graphiques reconnus pour produire une image de vecteur dépouillée de texte;
ajouter des éléments de texte de vecteur correspondant au texte extrait à l'image de vecteur dépouillée de texte pour produire une image de vecteur dont l'aspect est sensiblement identique à l'image trame;
**caractérisé en ce que** la reconnaissance d'objets graphiques dans l'image trame dépouillée de texte comprend:
établir (52, 54) une liste de passages de pixels bidimensionnels, où un passage de pixels est un groupe de pixels qui sont adjacents horizontalement et qui partagent la même coordonnée y, et les passages de pixels ont des coordonnées x identiques, et les coordonnées y adjacentes sont réunies pour créer le passage de pixels bidimensionnels;
reconnaître des lignes (56) dans la liste de passages de pixels bidimensionnels;
retirer de la liste de passages de pixels bidimensionnels les passages de pixels reconnus comme ligne;
reconnaître de grands objets binaires dans la liste de passages de pixels bidimensionnels; et
reconnaître des objets graphiques parmi les grands objets binaires reconnus en faisant correspondre chaque grand objet binaire avec sa primitive graphique de vecteur correspondante.

2. Procédé selon la revendication 1, dans lequel la reconnaissance d'objets graphiques dans l'image trame dépouillée de texte comprend la reconnaissance de lignes horizontales ou verticales longues avant la reconnaissance de lignes obliques courtes ou d'arcs très petits.

3. Procédé selon la revendication 1 ou 2, dans lequel la reconnaissance d'objets graphiques dans l'image trame dépouillée de texte comprend le lissage du bruit.

4. Procédé selon la revendication 1, dans lequel l'établissement (52, 54) d'une liste de séries de pixels bidimensionnels comprend:
le retrait des séries de pixels réunies avec une autre série de pixels de la liste des séries de pixels bidimensionnels.

5. Procédé selon la revendication 1 ou 4, comprenant en outre la réparation de grands objets binaires divisés par un retrait de pixels durant la reconnaissance de lignes.

6. Procédé selon l'une quelconque des revendications 1 à 5, comprenant en outre la définition de paramètres spécifiques à l'image.

7. Procédé selon la revendication 1, dans lequel l'image trame comprend un schéma de connexions sous format trame.

8. Système (10) pour convertir des dessins de réseaux (11) de format trame en format vecteur, le système comprenant:
un module (12) pouvant être exécuté par ordinateur pour reconnaître un texte dans une image trame en utilisant une reconnaissance de caractères optiques et un ensemble de caractères (20) associé à l'image trame, l'image trame comprenant un dessin de réseau (11) en format trame;
un module (12) pouvant être exécuté par ordinateur pour extraire le texte reconnu afin de produire une image trame texte seulement (42) et une image trame dépouillée de texte (44);
un module (12) pouvant être exécuté par ordinateur pour la reconnaissance d'objets graphiques dans l'image trame dépouillée de texte (44) par
l'utilisation de reconnaissance de motifs et de paramètres spécifiques à l'image associé à l'image trame,
un module (12) pouvant être exécuté par ordinateur pour utiliser des primitives graphiques de vecteurs correspondant aux objets graphiques reconnus pour produire une image de vecteur dépouillée de texte;
un module (12) pouvant être exécuté par ordinateur pour ajouter des éléments texte de vecteur correspondants au texte extrait à l'image de vecteur dépouillée de texte afin de produire une image de vecteur dont l'aspect est sensiblement identique à l'image trame;
**caractérisé en ce que** le module (12) pouvant être exécuté par ordinateur pour reconnaître des objets graphiques dans l'image trame dépouillée de texte comprend:
un sous-module exécutable par ordinateur pour établir une liste de séries de pixels bidimensionnels, où une série de pixels est un groupe de pixels qui sont adjacents horizontalement et partagent la même coordonnée y, et les séries de pixels ont des coordonnées x identiques, et des coordonnées y adjacentes sont réunies pour créer la série de pixels bidimensionnels;
un sous-module pouvant être exécuté par ordinateur pour reconnaître des lignes dans la liste de séries de pixels bidimensionnels;
un sous-module pouvant être exécuté par ordinateur pour retirer de la liste de séries de pixels bidimensionnels les séries de pixels reconnues comme lignes;
un sous-module pouvant être exécuté par ordinateur pour reconnaître de grands objets binaires dans la liste de séries de pixels bidimensionnels; et
un sous-module pouvant être exécuté par ordinateur pour reconnaître des objets graphiques dans les grands objets binaires en faisant correspondre chaque grand objet binaire avec sa primitive graphique de vecteur correspondante.

9. Système (10) selon la revendication 8, dans lequel le sous-module pouvant être exécuté par ordinateur pour la reconnaissance d'objets graphiques dans l'image trame dépouillée de texte comprend un sous-module pouvant être exécuté par ordinateur pour la reconnaissance de lignes horizontales ou verticales longues avant la reconnaissance de lignes obliques courtes ou de très petits arcs.

10. Système (10) selon la revendication 8 ou 9, dans lequel le module pouvant être exécuté par ordinateur pour la reconnaissance d'objets graphiques dans l'image trame dépouillée de texte comprend un sous-module pouvant être exécuté par ordinateur pour le lissage du bruit.

11. Système (10) selon la revendication 8, dans lequel le sous-module pouvant être exécuté par ordinateur pour l'établissement d'une liste de séries de pixels bidimensionnels comprend:
un sous-module pouvant être exécuté par ordinateur pour retirer les séries de pixels réunies avec une autre série de pixels de la liste de séries de pixels bidimensionnels.

12. Système (10) selon la revendication 8 ou 11, comprenant en outre un module pouvant être exécuté par ordinateur pour la réparation de grands objets binaires divisés par le retrait de pixels durant la reconnaissance de lignes.

13. Système (10) selon l'une quelconque des revendications 8 à 12, comprenant en outre un module pouvant être exécuté par ordinateur pour définir les paramètres spécifiques à l'image.

14. Système (10) selon l'une quelconque des revendications 8 à 13, dans lequel l'image trame comprend un schéma de connexions sous format trame.

15. Support lisible par ordinateur pouvant être interprété par un ordinateur agencé pour exécuter les étapes des revendications 1 à 7.
